## Europäisches Patentamt

## European Patent Office

## Office européen des brevets

(11) Veröffentlichungsnummer: **0 155 383**
**B1**

(12) # EUROPÄISCHE PATENTSCHRIFT

(45) Veröffentlichungstag der Patentschrift:
14.10.87

(51) Int. Cl.⁴: **H 01 B 1/12, C 08 L 79/04**

(21) Anmeldenummer: **84115282.0**

(22) Anmeldetag: **12.12.84**

(54) **Verfahren zur Verbesserung der Langzeitstabilität der elektrischen Leitfähigkeit von Pyrrol-Polymerisaten.**

(30) Priorität: **24.12.83  DE 3346935**

(43) Veröffentlichungstag der Anmeldung:
**25.09.85 Patentblatt 85/39**

(45) Bekanntmachung des Hinweises auf die Patenterteilung:
**14.10.87 Patentblatt 87/42**

(84) Benannte Vertragsstaaten:
**BE DE FR GB NL**

(56) Entgegenhaltungen:
**EP-A-0 031 967**

(73) Patentinhaber: **BASF Aktiengesellschaft, Carl-Bosch- Strasse 38, D-6700 Ludwigshafen (DE)**

(72) Erfinder: **Muenstedt, Helmut, Dr. Phys., An dem Altenbach 41, D-6706 Wachenheim (DE)**
Erfinder: **Naarmann, Herbert, Dr. Chem., Haardtblick 15, D-6719 Wattenheim (DE)**

## Beschreibung

Die Erfindung betrifft ein Verfahren zur Verbesserung der elektrischen Leitfähigkeit von Pyrrol-Polymerisaten, die Komplexierungsmittel enthalten.

Elektrische leitfähige Pyrrol-Polymerisate sind bekannt. So z. B. aus der US-PS 3 574 072 und den Arbeiten von A.F. Diaz et al., J.C.S. Chem. Comm. 1979, Seite 635 ff, J.C.S. Chem. Comm. 1979, Seite 854 ff. Diese elektrisch leitfähigen Pyrrol-Polymerisate werden durch anodische Polymerisation von Pyrrol in Gegenwart von Leitsalzen gebildet. Die Anionen der Leitsalze wirken als Komplexierungsmittel mit der Eigenschaft, daß das System aus Polypyrrol und Komplexierungsmittel leitfähig ist. Es ist in einer Reihe von älteren Vorschlägen und Veröffentlichungen die Verwendung elektrisch leitfähiger Pyrrol-Polymerisate in der Elektrotechnik z. B. als Schalter oder andere elektrische Bauteile beschrieben.

Es hat sich gezeigt, daß die bislang bekanntgewordenen elektrisch leitfähigen Pyrrol-Polymerisate eine gewisse Empfindlichkeit gegenüber der Einwirkung des Sauerstoffs der Luft haben, so daß bei längerer Lagerung an Luft die Leitfähigkeit verringert wird. Auch bei der Verwendung solcher komplexierten Pyrrol-Polymerisate als Ableiter in Batterien kann über einen längeren Zeitraum hinweg die Leitfähigkeit nachlassen.

Aufgabe der Erfindung ist es, ein Verfahren aufzuzeigen, daß die Langzeitstabilität der elektrischen Leitfähigkeit von Pyrrol-Polymerisaten verbessert.

Diese Aufgabe wird erfindungsgemäß gelöst durch ein Verfahren, bei dem man die Pyrrol-Polymerisate, die ein Komplexierungsmittel enthalten, in einem von der Herstellung des Polymerisates getrennten Schritt mit wäßrigen Säuren behandelt.

Eine weitere Ausführungsform der Erfindung ist die Verwendung der so behandelten Pyrrol-Polymerisate als Leiterelemente in der Elektrotechnik.

Die erfindungsgemäß zu verwendenden elektrisch leitfähigen Verbindungen aus der Klasse der Pyrrol-Polymerisate zeichnen sich durch eine hohe elektrische Leitfähigkeit aus, die im allgemeinen bei $10^2$ S/cm liegt.

Die Pyrrol-Polymerisate werden durch Polymerisieren von Verbindungen aus der Klasse der Pyrrole erhalten. Verbindungen aus dieser Klasse sind einmal Pyrrole selbst als auch die substituierten Pyrrole, die N-Alkylpyrrole, H-Arylpyrrole, die an den C-Atomen monoalkyl- oder dialkylsubstituierten Pyrrole und die an den C-Atomen monohalogen oder dihalogen substituierten Pyrrole. Zur Herstellung der erfindungsgemäß zu verwendenden Polymerisate kann Pyrrol allein oder in Mischung mit anderen Verbindungen aus der Klasse der Pyrrole verwendet werden. Vorzugsweise verwendet man Polymerisate des unsubstituierten Pyrrols.

Werden Polymerisate substituierter Pyrrole eingesetzt, so sind Polymerisate des 3,4-Dialkylpyrrols, insbesondere mit 1 bis 4 C-Atomen im Alkyl, sowie auch der 3,4-Dihalogenpyrrole, insbesondere des 3,4-Dichlorpyrrols bevorzugt.

Die Polymerisate können auch gegebenenfalls bestimmte Mengen anderer Verbindungen, die mit Pyrrolen copolymerisieren, einpolymerisiert enthalten. Als Verbindungen, die mit Pyrrolen copolymerisieren, eignen sich z. B. Cyclopentadien-Azulen und dessen Derivate, wie Benzazulen, Kajaazulen, ferner Fulven, Inden oder auch Quadratsäure. Es kommen auch heterocyclische Verbindungen in Frage, wie Lmidazol, Thiazol, Furan oder Thiophen. Auch 2-Bromthiophen, 2,6-Dimethylpyrridin und Pyrazin können verwendet werden. Auch kommen Aminoaromaten wie Amilin, Phenazetin, Aminopyrrolin oder 2-Aminoanthrazen in Frage. Bezogen auf 10 Teile Pyrrol können die Polymerisate 1 bis 10 Teile der mit Pyrrol copolymerisierenden Verbindungen einpolymerisiert enthalten.

Die Polymerisate werden bevorzugt durch elektrochemische Polymerisation der Pyrrole erhalten, wobei die Polymerisation der Monomeren durch anodische Oxidation erfolgt. Es werden hierzu beispielsweise Stromdichten von 2 bis 20 mA/cm$^2$ verwendet. Es werden meistens Spannungen im Bereich von 10 bis 50 Volt angelegt. Die Polymerisation erfolgt zweckmäßig in Gegenwart von Hilfsflüssigkeiten, worin die Pyrrole löslich sind. Es können hierzu polare organische Lösungsmittel verwendet werden. Verwendet man mit Wasser mischbare Lösungsmittel, so können auch geringe Mengen Wasser zugesetzt werden. Bevorzugte Lüsungsmittel sind Alkohole, Ether wie Dioxan oder auch Tetrahydrofuran, Aceton oder Acetonitril, Dimethylformamid oder n-Methylpyrrolidon.

Die Polymerisation erfolgt in Gegenwart von Komplexierungsmitteln. Man versteht hierunter Salze, die als Anionen beispielsweise Verbindungen der Gruppe $BF_4^-$, $AsF_4^-$, $AsF_6^-$, $SbF_6^-$, $SbCl^-$, $PF_6^-$, $ClO_4^-$, $HSO_4^-$ und $SO_4^{2-}$ oder vorzugsweise aromatische Sulfonsäuren wie Benzolsulfonsäure oder Toluolsulfonsäure oder auch andere organische Säuren wie Benzoesäure enthalten.

Die Salze enthalten als Kationen z. B. Lithium, Natrium oder Kalium. Sehr günstig sind auch die $NO^+$- und $NO_2^+$-Kationen sowie insbesondere die Onium-Kationen, vor allem des Stickstoffs und des Phosphors, etwa des Typs $R^4N^+$ und $R^4P^+$ worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem

NH$_4$+-Ion insbesondere das Tetramethylammonium-, das Tetraethylammonium-, das Tetra-n-butylammonium-, das Triphenylphosphonium und das Tri-n-butylphosphonium-Kation genannt. Die Verwendung von Verbindungen dieser Klasse ist bekannt und nicht Gegenstand der Erfindung. Man verwendet in allgemeinen die Verbindungen in solcher Menge, daß die Pyrrol-Polymerisate zwischen 10 und 40 Mol-% Komplexierungsmittel, bezogen auf 1 Mol Pyrrol enthalten.

Zur Herstellung der Pyrrol-Polymerisate können jedoch auch andere der bekannten Verfahren Verwendung finden. So kann man beispielsweise Pyrrol in wäßriger Lösung mit Hilfe starker Säuren oder mit anorganischen Peroxiverbindungen wie Kaliumpersulfat polymerisieren. Nach dem letztgenannten Verfahren erhält man Pyrrol-Polymerisate in feinpulvriger Form. Auch bei diesen Verfahren sind Salze der oben beschriebenen Art anwesend, so daß die Pyrrol-Polymerisate mit den entsprechenden Anionen komplexiert sind. Ein solches Verfahren, das eine Behandlung mit wäßrigen Säuren nur während der Polymerherstellung umfaßt, ist vom Schutzbereich der Patentansprüche ausgeschlossen.

Die für das Verfahren geeigneten komplexierten Pyrrol-Polymerisate können in unterschiedlicher Form vorliegen. So bildet sich z.B. bei der anodischen Oxidation der Pyrrole ein Polymerisat aus, das mit Anionen komplexiert ist und die Form der verwendeten Anode hat. Ist die Anode flächenförmig, bildet sich eine flächige Schicht des Polymerisates aus. Verwendet man Verfahren zur Herstellung feinpulvriger Pyrrol-Polymerisate, so können diese feinen Pulver nach bekannten Verfahren unter Druck und Hitze zu Formkörpern verpreßt werden. Man verwendet meistens Temperaturen zwischen 150 und 300°C und Drücke im Bereich von 50 bis 150 bar. Nach diesem bekannten Verfahren zur Herstellung der anionisch komplexierten Pyrrol-Polymerisate ist es also möglich, Formkörper beliebiger Formgebung zu erhalten. So können z. B. Folien, Platten oder räumlich geformte Gebilde Verwendung finden.

Die Pyrrol-Polymerisate, die ein Komplexierungsmittel enthalten, werden erfindungsgemäß mit wäßrigen Säuren behandelt. So kommen z. B. die wäßrigen Schwefelsäure oder Salzsäure in Frage. Vorteilhaft haben sich wäßrige Säuren erwiesen, die einen pH-Wert haben, der kleiner als 4 ist. Für die technische Handhabung hat es sich als besonders erwiesen, solche Säuren zu verwenden, die 0,1 bis 25 %ig, vorzugsweise 0,2 bis 10 %ig sind.

Je nach Konzentration der Säure ist die Behandlungszeit unterschiedlich. So reicht es z. B. aus, Filme der komplexierten Pyrrol-Polymerisate, die eine Dicke zwischen 10 und 100 µm haben, für die Dauer von 120 bis 240 Minuten mit den wäßrigen Säuren zu behandeln. Beim Behandeln mit z. B. 10 %iger Schwefelsäure zeigt es sich zunächst, daß innerhalb einer kurzen Behandlungsdauer die Leitfähigkeit der Probe ansteigt. So kann man feststellen, daß z. B. für eine Probe aus Polypyrol, das Benzolsulfonsäure als Komplexierungsmittel enthält, nach 10 minütiger Behandlungsdauer mit 10 %iger Schwefelsäure die Leitfähigkeit von 140 S/cm auf 160 S/cm ansteigt. Es wird also stets zunächst ein Ansteigen der Leitfähigkeit festgestellt, bei längerer Behandlungsdauer bleibt die Leitfähigkeit auf dem einmal erreichten Niveau, das meist im Bereich zwischen 150 S/cm liegt. Auch ist der Effekt abhängig von der Konzentration der verwendeten Säure.

Verfolgt man die Leitfähigkeit von Polypyrol über einen längeren Zeitraum, so stellt man fest, daß beim Lagern an Luft von beispielsweise 140°C die Leitfähigkeit der Proben innerhalb eines Zeitraums von 40 Stunden auf den halben Wert absinkt. Bei Proben, die mit wäßrigen Säuren unterschiedlicher Konzentrationen, z. B. Schwefelsäure zwischen 0,2 und 10 % behandelt worden simd, verändert sich im gleichen Zeitraum die Leitfähigkeit nicht merkbar. Es war also überraschend, daß nach der erfindungsgemäßen Behandlung die Langzeitstabilität der elektrischen Leitfähigkeit bedeutend vergrößert wird. Auch hat es sich als vorteilhaft erwiesen, daß man durch die Behandlung Leitfähigkeiten erhöhen kann.

Mitunter hatte sich als zweckmäßig erwiesen, die Proben der komplexierten Pyrrol-Polymerisate nach der Behandlung mit z. B. Schwefel- oder Salzsäure mit Laugen von Alkilmetallen zu behandeln, deren Konzentration im Bereich von 0,1 bis 25 % liegt. Durch diese Laugenbehandlung erreicht man ein Absinken der Leitfähigkeit gegenüber dem Wert der Leitfähigkeit, der nach der Säurebehandlung erzielt worden ist. Die mit Laugen behandelten Proben haben ebenfalls eine Langzeitstabilität, die der von Proben entspricht, die nur mit Säuren behandelt worden sind. Lediglich der Wert der Leitfähigkeit liegt dann unter dem Wert der Proben, die mit Säuren behandelt worden waren.

**Beispiel 1**

Eine Folie aus Polypyrrol, die 30 Mol.% Benzonsulfonsäure als Leitsatz, bezogen auf 1 Mol Pyrrol, enthält und die eine Dicke von 80 µ hat wurde für die Dauer von 240 Minuten mit Schwefelsäure unterschiedlicher Konzentration behandelt.

Die mit Säure behandelten Proben und die unbehandelten Probe wurden für die Dauer von 50 Tagen bei einer Temperatur von 140°C an Luft gelagert. Es wurde die Leitfähigkeit der Proben zu Beginn der Lagerung ermittelt und in Beziehung gesetzt zu der Leitfähigkeit nach Ende der 50 tägigen Lagerung. $\sigma_0$ ist die Leitfähigkeit zu Beginn der Lagerung und $\sigma$ die Leitfähigkeit

nach Abschluß der Versuche. Es wurden folgende Ergebnisse ermittelt:

$\sigma/\sigma_0 = 0{,}09$ Standard-PPy

$\sigma/\sigma_0 = 0{,}72$ PPy mit 2 % Schwefelsäure behandelt

$\sigma/\sigma_0 = 0{,}70$ PPy mit 10 % Schwefelsäure behandelt

Wie daraus zu entnehmen ist, fällt die Leitfähigkeit der mit Schwefelsäure behandelten Proben um einen wesentlich geringeren Grad ab als die der Probe, die nicht behandelt worden ist.

**Beispiel 2**

Eine Probe von Polypyrrol, die in dem Beispiel 1 charakterisiert ist, wurde mit 10 %iger Schwefelsäure für die Dauer von 120 Minuten behandelt.

Die Probe wurde gewaschen und getrocknet. Es wurde die Leitfähigkeit gemessen und festgestellt, daß die Leitfähigkeit von ursprünglich 140 S/cm auf 160 S/cm angestiegen ist.

**Patentansprüche**

1. Verfahren zur Verbesserung der Langzeitstabilität der elektrischen Leitfähigkeit von Pyrrolpolymerisaten, dadurch gekennzeichnet, daß man die Polymerisate, die ein Komplexierungsmittel enthalten, in einem von der Herstellung des Polymerisats getrennten Schritt mit wäßrigen Säuren behandelt.

2. Verfahren nach Anspruch 1, dadurch gekennzeichnet, daß man wäßrige Säuren mit einem pH-Wert von kleiner als 4 verwendet.

3. Verfahren nach Anspruch 1, dadurch gekennzeichnet, daß man als wäßrige Säuren Schwefelsäure oder Salzsäure verwendet.

4. Verfahren nach Anspruch 1 und 2, dadurch gekennzeichnet, daß man 0,1 bis 25 %ige Schwefelsäure verwendet.

5. Verfahren nach Anspruch 1, dadurch gekennzeichnet, daß man die Polymerisate anschließend mit Laugen behandelt.

6. Verwendung von Pyrrolpolymerisaten, die nach dem Verfahren gemäß Anspruch 1 behandelt worden sind, als Leiterelemente in der Elektrotechnik.

**Claims**

1. A process for improving the long-term stability of the electrical conductivity of pyrrole polymers, wherein the polymers containing a complexing agent are treated with an aqueous acid in a step separate from that for preparing the polymers.

2. A process as claimed in claim 1, wherein the aqueous acid used has a pH of less than 4.

3. A process as claimed in claim 1, wherein the aqueous acid used is sulphuric acid or hydrochloric acid.

4. A process as claimed in claims 1 and 2, wherein 0.1 - 25 % strength sulphuric acid is used.

5. A process as claimed in claim 1, wherein the polymers are subsequently treated with an alkali metal hydroxide solution.

6. The use of pyrrole polymers treated by a process as claimed in claim 1 as conductor elements in electrical engineering.

**Revendications**

1. Procédé pour améliorer la stabilité de longue durée de la conductibilité électrique de polymères du pyrrole, caractérisé en ce que l'on traite les polymères qui contiennent un agent de complexion, au cours d'une étape séparée de la préparation du polymère, par des acides aqueux.

2. Procédé suivant la revendication 1, caractérisé en ce que l'on utilise des acides aqueux qui possèdent une valeur de pH inférieure à 4.

3. Procédé suivant la revendication 1, caractérisé en ce qu'à titre d'acides aqueux, on utilise de l'acide sulfurique ou de l'acide chlorhydrique.

4. Procédé suivant les revendications 1 et 2, caractérisé en ce que l'on utilise de l'acide sulfurique à 0,1- 25 %.

5. Procédé suivant la revendication 1, caractérisé en ce que l'on traite les polymères par des lessives.

6. Emploi de polymères du pyrrole qui ont été traités suivant le procédé conforme à la revendication 1, à titre d'éléments conducteurs dans l'électrotechnique.